# EUROPEAN PATENT SPECIFICATION

(11) **EP 1 045 540 B1**
(45) Date of publication and mention of the grant of the patent: **19.03.2008**
(21) Application number: 99304806.5
(22) Date of filing: 18.06.1999
(51) Int. Cl.: H04J 3/17, H04L 12/56

(54) **Medium access control (MAC) method in a cellular packet voice system**
Mediumzugangsteuerverfahren in einem zellularen Sprachpaketsystem
Méthode de commande d'accès au support dans un système cellulaire par paquets

(30) Priority: 13.04.1999 EP 99302882
(43) Date of publication of application: 18.10.2000
(73) Proprietor: Lucent Technologies Inc., Murray Hill, New Jersey 07974-0636 (US)
(72) Inventor: Brooks, Fiona Clare, Millbrook Place, Bath, BA2 4JY (GB); Demetrescu, Cristian, Middlesex TW2 5LY (GB); Foster, Gerard Terence, Swindon, Wilts, SN2 3GF (GB); Giustina, Andrea, Swindon, Wilts, SN25 4YA (GB); Ilas, Constantin, Swindon, Wilts, SN5 9RP (GB); Samuel, Louis Gwin, Swindon, Wilts, SN2 3YG (GB)
(74) Representative: Williams, David John

(56) References cited:
- EP-A- 0 171 596
- US-A- 5 297 144
- R. TAFAZOLLI AND B.G. EVANS: "A novel multiple access scheme for third generation mobile/personal communication system" 1992 IEEE INTERNATIONAL CONFERENCE ON SELECTED TOPICS IN WIRELESS, 25 - 26 June 1992, pages 21-26, XP002117314 Vancouver BC Canada
- EUROPEAN TELECOMMUNICATIONS STANDARDS INSTITUTE: "ETS 301349 V6.1.0 Digital cellular telecommunications system ( phase 2+); General Packet Radio Service ( GPRS ); Mobile Station ( MS ) - Base Station System ( BSS ) interface; Radio Link Control / Medium Access Control ( RLC/MAC ) protocol ( GSM 04.60 version 6.1.0 Release 1997 )" August 1998 (1998-08) , EUROPEAN STANDARD (TELECOMMUNICATIONS SERIES), PP. 1, 15, 62 , SOPHIA-ANTIPOLIS, FRANCE XP002117315 * paragraph [5.2.2] * * paragraph [10.4.10] *
- SHEIKH A U ET AL: "PERFORMANCE OF ACCESS STRATEGIES FOR D-TASI OVER MOBILE RADIO FADING CHANNELS" JOURNAL OF THE INSTITUTION OF ELECTRONIC AND RADIO ENGINEERS, vol. 57, no. 6, SUPPL, November 1987 (1987-11), pages S304-S310, XP000796530

## Description

This invention relates to packet radio networks.

Packet-switched radio networks can potentially increase system capacity as compared with the circuit-switched networks due to the inherent statistical multiplexing gain. This is because a user is not occupying the radio channel all the time during a session and when the radio channel is idle it can be used by other active users. However in order to take full advantage of the statistical multiplexing gain fast access to the radio resources is required specially for real-time services like voice and life video transmission.

One of the most common radio access procedures is based on the protocol reservation media access (PRMA) where any active user (i.e. user which has data to transmit) sends a random access number on a common radio channel as in the ALOHA system. The PRMA system was addressed in several papers for example: "Performance of a statistically multiplexed access mechanism for a TDMA radio interface", J. Dunlop et al., IEEE Personal Communications, 1995, pp.56-64; "The performance of the GSM random access procedure", C. Luders and R. Haferbeck, Proceedings of IEEE VTC, Vol. 2, 1994, pp. 1165-1169. The PRMA protocol is used for the access procedure in the general packet radio service (GPRS) for GSM phase 2+ (for reference on GPRS see "Digital cellular telecommunications system (Phase 2+), General Packet Radio System (GPRS), Mobile Station-Base Station System interface, Radio Link Control/Medium Access Control (RLC/MAC) protocol, GSM 04.60, version 2.0.0"). However, although PRMA is suitable for bursty users (like e-mail and telemetry) where the packet delay constraint is much larger than the network reply time, for real-time services (like voice and video) which are delay sensitive, the packet delay is critical.

In the PRMA access scheme a voice user requests a channel every time it switches between silence and speech periods. During the silence period the radio channel is released by the voice user and returned to the common pool of channels. As the voice user becomes active (i.e. generating speech) a random access (RA) burst is sent on the random access channel (RACH), which is a common control channel shared by all users in a cell, as in the slotted ALOHA protocol. This process leads to a packet multiplexing statistical gain i.e. there can be more users than radio channels. In order to benefit from the statistical gain inherent in any packet network the access delay (i.e. the time elapsed from the moment when the RA was first sent on the RACH to the moment when the a traffic channel is allocated to the user) should be very small compared with the tolerable service delay (e.g. for voice service the one way delay is less than 100ms). However for some packet networks based on the PRMA (e.g. GPRS) the access delay is, in the best case (i.e. no contention on the RACH channel among different RA attempts), higher than the maximum acceptable delay for a voice service. Thus a new procedure is required in these cases.

It is known from a paper entitled "A novel multiple access scheme for 3rd Generation mobile/personal communication stystem" by R. Tafazolli and Prof. B.G. Evans, 1992 IEEE Proceedings of the International Conference on Selected Topics in Wireless 25-26 June 1992, pages 21-26, XP-002117314 Vancouver BC Canada to provide a packet radio network comprising a base station and at least one mobile station, the base station and a mobile station being arranged to communicate over radio link, and, on the uplink, in data blocks of fixed length with each data block containing a flag indicating whether the payload is speech or silence, and there being a radio channel dedicated for uplink communication between the mobile terminal and the base station.

The present invention is characterized in that the radio channel is dedicated for as long as the flag indicates that the payload is speech, and the base station comprises polling means operative such that, after the base station receives a flag indicating that the payload is silence, the base station polls the mobile station dynamically, indicating in what radio channel the mobile station should send its next data block. This facilitates rapid allocation of a radio channel when there is speech to send.

In order to maximise the payload for voice service, each data block preferably contains a temporary flow indicator identifying the mobile station and the base station and not containing the destination address.

In order to further reduce delay in sending speech, silence blocks are preferably queued waiting transmission at the mobile station and in any silence blocks queuing are discarded when a first speech block is ready for transmission.

One embodiment of the invention will now be described with reference to the accompanying drawings, in which:
Figure 1 illustrates reduced speech frame headers on the UL and the DL;
Figure 2 illustrates SF bits;
Figure 3 illustrates the RLC/MAC output block for speech and SID; and
Figure 4 illustrates an input block for the RLC/MAC for speech and SID.

### Abbreviations

The following abbreviations will be used in the description.
- GPRS: General Packet Radio Service
- USF: Uplink State Flag
- RLC: Radio Link Control
- MAC: Medium Access Control
- RSD: RLC Service Discriminator
- SID: Silence Descriptor
- DSP: Digital Signal Processing
- VoGPRS: Voice over GPRS
- CRC: Check Redundancy Code
- Pk: Packet
- GMM: GPRS Mobility Management
- GCC: GPRS Call Control
- G-EFR: GPRS Enhanced Full Rate Channel Coder
- G-HR: GPRS Half Rate Channel Coder
- UL: Uplink
- DL: Downlink
- CS-1: Coding Scheme 1
- CS-2: Coding Scheme 2
- PDU: Packet Data Unit
- TFI: Temporary Flow Identifier
- BSS: Base Station Subsystem

Broadly, to accommodate voice over a packet radio network the RLC/MAC layer is required to work in RLC-MODE unacknowledged and MAC-MODE dynamic allocation. For MAC-MODE dynamic allocation, on receipt of a downlink (DL) RLC/MAC block with its USF the GPRS MS sends an RLC/MAC block on the uplink (UL) in the next UL block (as defined in GSM 05.02, section 6.3.2.2.1). The VoGPRS signalling messages may also be transmitted in RLC-MODE unacknowledged. The default access mode is two phase access.

A new channel coder is implemented for VoGPRS based on the channel coders used in GSM. For simplicity, this channel coding scheme is termed coding scheme-2 (CS-2) and is the new GPRS packet voice enhanced full rate channel coder (G-EFR). The GPRS CS-1 is used when signalling messages are transmitted over the radio interface. The GPRS MS switches between CS-1 and CS-2 (i.e. G-EFR) when transmitting signalling messages and speech frames, respectively. Switching between coding schemes is performed by signals and speech data having different SAPIs to the RLC/MAC layer.

The input to the RLC/MAC layer contains 244 information bits from the speech coder.

At the RLC/MAC layer speech frames and SID frames, are treated differently and have different inputs of service access points SAPI.

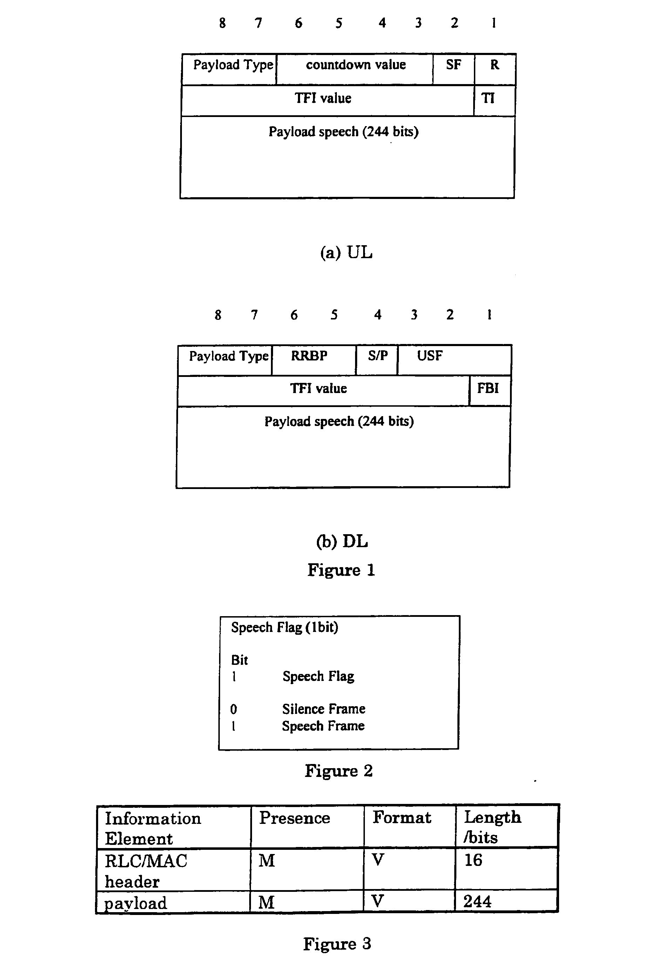

In order to increase the payload in the RLC/MAC block a reduced header is introduced for the packet voice frames as shown in Figure 1.

Packet voice frames are indicated by the SF bit on the uplink and is used to allow fast change over in the polling algorithm between polled and dedicated modes.

The SF (Speech Flag) bit replaces the SI (Stalled Indicator) bit from GPRS on uplink because packet voice works in an RLC unacknowledged mode making the S1 bit redundant.

The higher layer protocol headers (e.g. TCP/IP, LLC, SNDCP) are not added to the voice packets so that destination address is not sent in every packet. This is intended to increase the payload for voice packets. The speech flow is uniquely identified between MS and BSS via TFI passed in the RLC/MAC header as shown in Figure 3. At the destination the higher layer protocol headers are added back to the RLC/MAC block once the block is received error free over the radio interface.

The reduced RLC/MAC header shown in Figure 1 may be protected by a CRC code.

An RLC/MAC block containing SID frames is termed an "SID RLC/MAC block"

The RLC/MAC layer provisions buffering space for 3 Speech/SID RLC/MAC blocks. The queueing discipline at the RLC/MAC is as follows. The Speech RLC/MAC blocks (identifiable by the payload type) have the highest MAC priority and are always inserted at the head of the MAC queue. The SID RLC/MAC blocks have the lowest MAC priority.

If more than 3 Speech RLC/MAC blocks are received by the RLC/MAC layer (excluding the Speech RLC/MAC block already in service), the following processes occur:
- the oldest Speech RLC/MAC block is be discarded,
- the new Speech RLC/MAC block is inserted in at the tail of the MAC queue (i.e. discard the RLC/MAC block at the head of the queue and insert the newly arrived block at the tail of the queue).
- If fewer than 3 Speech RLC/MAC blocks are in the MAC queue than the queue discipline for Speech RLC/MAC blocks is first-in-first-out (FIFO).

If more than 3 SID RLC/MAC blocks are received by the RLC/MAC layer (excluding the SID RLC/MAC block already in service) and no speech RLC/MAC block is in the MAC queue, then the following processes occur:
- the oldest SID RLC/MAC block is discarded,
- the new SID RLC/MAC block inserted at the tail of the MAC queue (i.e. discard the RLC/MAC block at the head of the queue and insert in the tail of the queue the newly arrived block).
- If fewer than 3 SID RLC/MAC blocks are in the MAC queue and no Speech RLC/MAC block is in the MAC queue than the queue discipline for the SID RLC/MAC blocks is first-in-first-out (FIFO).

If there is an SID RLC/MAC block already in the queue when an Speech RLC/MAC block arrives then the RLC/MAC layer discards all SID RLC/MAC blocks from the MAC queue and inserts the new Speech RLC/MAC block at the head of the MAC queue.

If there is a Speech RLC/MAC block already in the queue when an SID RLC/MAC block arrives then the new SID RLC/MAC block is inserted at the tail of the MAC queue.

The output from the RLC/MAC layer is passed to the DSP. It contains a 16 bits RLC/MAC header and 245 bit payload as shown in Figure 3.

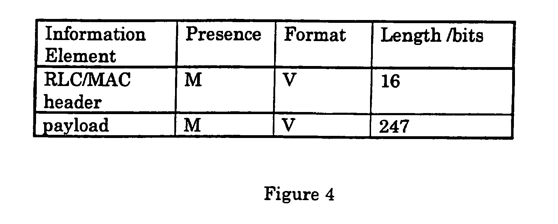

The input to the RLC/MAC layer is collected from the DSP. It contains a 16 bits RLC/MAC header and 247 bit payload as shown in Figure 4.

## Claims

1. A packet radio network comprising a base station and at least one mobile station, the base station and the mobile station being arranged to communicate over a radio link, and, on the uplink, in data blocks of fixed length with each data block containing a flag indicating whether the payload is speech or silence, and there being a radio channel dedicated for uplink communication between the mobile station and the base station,
**characterized in that**
the radio channel is dedicated for as long as the flag indicates that the payload is speech, and
the base station comprise polling means operative such that, after the base station receives a flag indicating that the payload is silence, the base station polls the mobile station dynamically, indicating in what radio channel the mobile station should send its next data block.

2. A packet radio network as claimed in claim 1 wherein for voice service each data block contains a temporary flow indicator identifying the mobile station and the base station and not containing the destination address.

3. A packet radio station as claimed in claim 1 or 2, in which silence blocks are queued waiting transmission at the mobile station and in which any silence blocks queuing are discarded when a first speech block is ready for transmission.

## Patentansprüche

1. Paketfunknetzwerk, umfassend eine Basisstation und mindestens eine Mobilstation, wobei die Basisstation und die Mobilstation angeordnet sind, um über eine Funkstrecke und auf der Aufwärtsstrecke in Datenblocks von festgelegter Länge mit einem Cachedatenblock zu kommunizieren, der ein Flag enthält, das anzeigt, ob die Nutzlast Sprache oder Stille ist, und wobei ein Funkkanal existiert, der für eine Aufwärtsstreckenkommunikation zwischen der Mobilstation und der Basisstation zweckbestimmt ist,
**dadurch gekennzeichnet, dass**
der Funkkanal solange zweckbestimmt ist, wie das Flag anzeigt, dass die Nutzlast Sprache ist, und
die Basisstation Sendeaufrufmittel umfasst, die betriebsbereit sind, so dass die Basisstation die Mobilstation dynamisch zum Senden aufruft und anzeigt, welchem Funkkanal die Mobilstation ihren nächsten Datenblock senden soll, nachdem die Basisstation ein Flag empfängt, das anzeigt, dass die Nutzlast Stille ist.

2. Paketfunknetzwerk nach Anspruch 1, wobei jeder Datenblock für den Sprachdienst einen temporären Durchflussanzeiger enthält, welcher die Mobilstation und die Basisstation identifiziert und die Zieladresse nicht enthält.

3. Paketfunknetzwerk nach Anspruch 1 oder 2, in dem Stilleblöcke in einer Warteschleife angeordnet sind, die auf die Übertragung bei der Mobilstation warten, und in dem sämtliche Stilleblöcke, die in einer Warteschleife anstehen, verworfen werden, wenn ein erster Sprachblock bereit zur Übertragung ist.

## Revendications

1. Réseau radio par paquets comprenant une station de base et au moins une station mobile, la station de base et la station mobile étant agencées pour communiquer sur une liaison radio, et, sur la liaison montante, dans des blocs de données de longueur fixe, chaque bloc de données contenant un fanion indiquant si la charge utile est de la parole ou du silence, et un canal radio étant dédié à la communication sur liaison montante entre la station mobile et la station de base,
**caractérisé en ce que**
le canal radio est dédié tant que le fanion indique que la charge utilise est de la parole, et
la station de base comprend un moyen d'interrogation fonctionnant de telle sorte que, après que la station de base reçoit un fanion indiquant que la charge utile est du silence, la station de base interroge la station mobile dynamiquement, indiquant dans quel canal radio la station mobile doit envoyer son prochain bloc de données.

2. Réseau radio par paquets selon la revendication 1, dans lequel pour un service vocal chaque bloc de données contient un indicateur de flux temporaire identifiant la station mobile et la station de base et ne contenant pas l'adresse destinataire.

3. Réseau radio par paquets selon la revendication 1 ou 2, dans lequel des blocs de silence sont mis en file d'attente en attendant d'être transmis au niveau de la station mobile et dans lequel tous blocs de silence mis en file d'attente sont rejetés quand un premier bloc de parole est près à être transmis.
